# EUROPÄISCHE PATENTSCHRIFT

(11) **EP 0 459 552 B1**
(45) Veröffentlichungstag und Bekanntmachung des Hinweises auf die Patenterteilung: **07.02.1996**
(21) Anmeldenummer: 91201032.9
(22) Anmeldetag: 01.05.1991
(51) Int. Cl.: C08K 9/02, C09C 1/02, H01B 1/06

(54) **Elektrisch leitfähiges Bariumsulfat und Verfahren zu seiner Herstellung**
Electroconductive barium sulphate and process for manufacturing the same
Sulfate de baryum électroconducteur et procédé pour sa préparation

(30) Priorität: 26.05.1990 DE 4017044
(43) Veröffentlichungstag der Anmeldung: 04.12.1991
(73) Patentinhaber: METALLGESELLSCHAFT Aktiengesellschaft, D-60015 Frankfurt (DE)
(72) Erfinder: Aderhold, Clemens, Dr., W-4150 Krefeld (DE); Griebler, Wolf-Dieter, Dr., W-4130 Moers 1 (DE); Hocken, Jörg, Dr., W-4000 Düsseldorf 11 (DE); Rosin, Uwe, W-4132 Kamp-Lintfort (DE); Rudolph, Günther, Dr., W-6451 Neuberg 1 (DE); Takao, Hayashi, Shimonoseki-shi, Yamaguchi-ken (jp); Norihiro, Sato, Shimonoseki-shi, Ymaguchi-ken (jp); Manabu, Hosoi, Saitama-ken (jp); Nobuyoshi, Kasahara, Sayama-shi, Saitama-ken (jp)

(56) Entgegenhaltungen:
- WPIL, FILE SUPPLIER, AN=82-04671E, Derwent Publications Ltd, Londen, GB; & JP-A-56 157 438
- WPIL, FILE SUPPLIER, AN=81-86328D, Derwent Publications Ltd, Londen, GB; & JP-A-56 130 006

## Beschreibung

Die Erfindung betrifft elektrisch leitfähiges Bariumsulfat, die Verwendung des elektrisch leitfähigen Bariumsulfats und ein Verfahren zu seiner Herstellung.

Die elektrisch isolierenden Eigenschaften von Kunststoffen führen bei ihrer Anwendung in einigen Fällen zu technischen Problemen. Wenn beispielsweise elektronische Bauelemente von größeren, elektromagnetischen Feldern abgeschirmt werden müssen, wie das bei Computergehäusen der Fall ist, oder wenn elektrische Ladungen von Bauelementen abgeleitet werden sollen, sind die elektrisch isolierenden Eigenschaften von Kunststoffen besonders nachteilig. Schwierigkeiten als Folge der elektrisch isolierenden Eigenschaften der Kunststoffe ergeben sich auch bei der Lagerung von Sprengstoffen oder IC-Schaltelementen, bei der Herstellung antistatisch ausgerüsteter medizinischer Gummiwaren, antistatisch ausgerüsteter Teppichböden oder elektrisch leitfähiger Metallklebstoffe. Es ist bekannt, die elektrische Leitfähigkeit von Polymeren durch Zusatz von leitfähigen Partikeln herbeizuführen. Als leitfähige Partikel kommen dabei Metall- oder Rußpartikel sowie Partikel, die aus halbleitenden Oxiden, wie Zinkoxid, oder Jodiden, wie Kupferjodid, bestehen, zum Einsatz. Bei Verwendung von Metall- oder Rußpartikeln ist jedoch nachteilig, daß die mit den Additiven versetzten Polymere schwarz gefärbt sind, was in vielen Fällen nicht erwünscht ist. Werden Partikel aus Zinkoxid verwendet, so kommt es zu nachteiligen temperaturabhängigen Schwankungen der elektrischen Leitfähigkeit. Mit Kupferjodid versetzte Polymere weisen nur eine geringe chemische Stabilität auf, so daß die Anzahl der Anwendungsfälle von mit Kupferjodid versetzten Polymeren beschränkt ist.

In der JP-56157438-A wird ein Verfahren zur Herstellung einer Pulvermischung beschrieben, die Kunststoffen zugegeben werden kann, um die elektrische Leitfähigkeit der Kunststoffe herbeizuführen. Nach diesem Verfahren wird eine erhitzte, wäßrige Bariumsulfatdispersion mit einer Lösung versetzt, die SnCl₄ und SbCl₃ enthält. Dabei wird eine Fällung in saurem Medium durchgeführt, bei der eine Pulvermischung entsteht, die aus SnO₂-Pulver und BaSO₄-Pulver besteht. Die mit dieser Pulvermischung versetzten Kunststoffe weisen jedoch eine elektrische Leitfähigkeit auf, die thermisch nicht stabil ist. Ferner ist die Dispergierbarkeit der Pulvermischung in Kunststoffen relativ schlecht, so daß die Herstellung eines homogenen Gefüges aus Pulvermischung und Kunststoff problematisch ist.

Der Erfindung liegt daher die Aufgabe zugrunde, ein elektrisch leitfähiges Bariumsulfat zu schaffen, das eine thermisch stabile elektrische Leitfähigkeit und eine gute Dispergierbarkeit in Kunststoffen aufweist. Darüberhinaus besteht die der Erfindung zugrundeliegende Aufgabe darin, ein Verfahren zur Herstellung des elektrisch leitfähigen Bariumsulfats zu schaffen, das mit technisch einfachen Mitteln durchführbar ist und mit hoher Reaktionsgeschwindigkeit abläuft.

Die der Erfindung zugrundeligende Aufgabe wird dadurch gelöst, daß das elektrisch leitfähige Bariumsulfat aus BaSO₄-Teilchen besteht, die von einer Schicht aus mit Sb₂O₃ dotiertem SnO₂ umhüllt sind. Der Anteil von sb₂O₃ in der SnO₂-Schicht beträgt 1 bis 15 Gew.-%. Die Schicht hat eine Dicke von 2 bis 80 nm. Das BaSO₄ hat eine spezifische Oberfläche von 0,1 bis 150 m/g. Die spezifische elektrische Leitfähigkeit des erfindungsgemäßen Stoffes beträgt 1,2 x 10⁻⁴ bis 7 x 10⁻¹ (Ω x cm)⁻¹. Es hat sich überraschenderweise gezeigt, daß das erfindungsgemäße, elektrisch leitfähige Bariumsulfat eine gute Dispergierbarkeit in Kunststoffen, besonders in Harzen, aufweist. Ferner zeichnen sich die mit dem erfindungsgemäßen, elektrisch leitfähigen Bariumsulfat versetzten Kunststoffe durch eine konstante elektrische Leitfähigkeit bei Temperaturschwankungen aus, so daß die mit dem erfindungsgemäßen, elektrisch leitfähigen Bariumsulfat versetzten Kunststoffe vielseitig verwendet werden können.

Eine bevorzugte Ausgestaltung der Erfindung besteht darin, daß der Anteil von Sb₂O₃ in der Schicht 6 bis 12 Gew.-% beträgt. Das elektrisch leitfähige Bariumsulfat weist dadurch eine relativ hohe elektrische Leitfähigkeit auf, wodurch der Gewichtsanteil der Schicht am elektrisch leitfähigen Bariumsulfat relativ niedrig gehalten werden kann, so daß auch der Preis für das elektrisch leitfähige Bariumsulfat relativ niedrig ist.

Gemäß einer weiteren bevorzugten Ausgestaltung der Erfindung beträgt die Dicke der Schicht 10 bis 30 nm. Dadurch läßt sich eine relativ hohe Haftfestigkeit der Schicht aus mit Sb₂O₃ dotiertem SnO₂ auf den BaSO₄-Teilchen erreichen. Beträgt die Dicke der Schicht 10 bis 30 nm, so ist gewährleistet, daß die Schicht bei der Einarbeitung des elektrisch leitfähigen Bariumsulfats nicht von den BaSO₄-Teilchen abgetrennt wird.

Nach einer weiteren bevorzugten Ausgestaltung der Erfindung besitzen die BaSO₄-Teilchen eine spezifische Oberfläche von 0,1 bis 150 m/g. Dadurch ist das erfindungsgemäße elektrisch leitfähige Bariumsulfat auf vielen Gebieten einsetzbar.

Gemäß einer weiteren Ausgestaltung der Erfindung besitzen die BaSO₄-Teilchen eine spezifische Oberfläche von 0,1 bis 3 oder von 12 bis 150 m/g. Dadurch wird erreicht, daß das elektrisch leitfähige Bariumsulfat eine Transparenz aufweist und somit vorteilhaft mit Anstrichmassen verarbeitet werden kann, um für diese eine elektrische Leitfähigkeit herbeizuführen, ohne das Deckvermögen weiterer Pigmente nachteilig zu beeinflussen.

Die der Erfindung zugrundeliegende Aufgabe wird ferner durch ein Verfahren zur Herstellung eines elektrisch leitfähigen Bariumsulfats gelöst, bei dem eine wäßrige BaSO₄-Dispersion mit einer ersten Lösung, die SnCl₄ enthält, versetzt wird und die Mischung anschließend mit einer zweiten Lösung, die SbCl₃ enthält, versetzt wird, welches dadurch gekennzeichnet ist, daß eine wäßrige BaSO₄-Dispersion mit einer BaSO₄-Konzentration von 50 bis 800 g/l verwendet wird, daß die erste saure Lösung SnCl₄ in einer Konzentration von 1 bis 95 Gew.-% enthält, daß die zweite saure Lösung SbCl₃ in einer Konzentration von 0,5 bis 60 Gew.-% enthält, daß mit der Zugabe der ersten Lösung zu der BasO₄-Dispersion gleichzeitig eine basische Lösung bis zu einem pH-Wert von mehr als 9 zugegeben wird, daß der pH-Wert der Mischung durch Zugabe von Säure vor der Zugabe der zweiten Lösung auf 4 bis 1 gesenkt wird, und daß das entstandene elektrisch leitfähige Bariumsulfat separiert, getrocknet und bei 300 bis 800°C geglüht wird. Als basische Lösung können beispielsweise wäßrige NaOH- oder KOH-Lösungen verwendet werden. Dieses Verfahren hat den Vorteil, daß die BaSO₄-Teilchen vollständig von einer Schicht aus mit Sb₂O₃ dotiertem SnO₂ umhüllt werden. Das Verfahren ist leicht und schnell durchführbar, und das nach dem Verfahren hergestellte elektrisch leitfähige Bariumsulfat weist eine gute Dispergierbarkeit in Kunststoffen auf.

Gemäß einer weiteren Ausgestaltung der Erfindung wird der BaSO₄-Suspension vor der Zugabe der ersten Lösung eine dritte saure Lösung bei einem pH-Wert von 0 bis 3 zugegeben, die SnCl₄ in einer Konzentration von 1 bis 95 Gew.-% enthält, und danach wird die entstandene Ausgangsmischung vor der Zugabe der ersten Lösung und der basischen Lösung 10 bis 200 min gerührt. Dies hat den Vorteil, daß die Oberfläche der BaSO₄-Teilchen vor der Zugabe der ersten Lösung durch das in der dritten Lösung enthaltene SnCl₄ angeätzt wird, so daß die Schicht aus mit Sb₂O₃ dotiertem SnO₂ schneller und stärker an den BaSO₄-Teilchen haftet.

Nach einer weiteren Ausgestaltung der Erfindung wird die Mischung nach der Zugabe der ersten Lösung und der basischen Lösung 10 bis 200 min gerührt und danach der pH-Wert der Mischung durch Zugabe von Säure vor der Zugabe der zweiten Lösung auf 4 bis 1 gesenkt. Dies hat den Vorteil, daß die BasO₄-Teilchen mit einer Schicht aus SnO₂ vollständig umhüllt werden, bevor eine Dotierung des SnO₂ mit Sb₂O₃ eingeleitet wird, was zur Folge hat, daß das Sb₂O₃ homogen in der Schicht aus SnO₂ verteilt wird.

Gemäß einer weiteren Ausgestaltung der Erfindung wird das elektrisch leitfähige Bariumsulfat nach 1 bis 30 Stunden separiert, getrocknet und geglüht. Dadurch wird eine relativ hohe chemische Stabilität des elektrisch leitfähigen Bariumsulfats erreicht.

Nach einer weiteren Ausgestaltung der Erfindung wird das elektrisch leitfähige Bariumsulfat zur Herstellung elektrisch leitfähiger Klebstoffe oder elektrisch leitfähiger Anstrichmassen oder elektrisch leitfähiger Kunststoffe oder elektrisch leitfähiger Laminatpapiere oder elektrisch leitfähiger Synthesefasern verwendet. Dadurch läßt sich die Qualität der genannten Produkte verbessern. Der Gegenstand der Erfindung wird anhand der nachstehenden Beispiele näher erläutert.

### Beispiel 1

100 g BaSo₄ mit einem mittleren Teilchendurchmesser von 10 µm und einer spezifischen Oberfläche von 0,1 m/g werden in 400 ml Wasser suspendiert, das eine Temperatur von 70°C hat. Anschließend wird der pH-Wert durch Zugabe von 1 ml konzentrierter Salzsäure auf 2 eingestellt. Danach werden der sauren BaSO₄-Dispersion 500 ml Wasser, das eine Temperatur von 70°C hat und die dritte Lösung aus 1 ml SnCl₄ und 1 ml konzentrierter Salzsäure zugesetzt. Die so entstandene Ausgangsmischung wird 60 min gerührt, wobei sich ein pH-Wert von 1,5 einstellt. Nachfolgend werden gleichzeitig 800 ml 10%ige NaOH und als erste Lösung 31 ml SnCl₄, letzteres gelöst in 100 ml 2-molarer Salzsäure, zugegeben. Die Mischung wird 30 min gerührt. Dabei wird die Temperatur auf 70°C gehalten. Innerhalb der nächsten 90 Minuten wird der pH-Wert durch Zugabe von 110 ml 2-molarer Salzsäure auf 2,5 gesenkt. Danach werden als zweite Lösung 100 ml 2-molare Salzsäure, die 5,3 g SbCl₃ enthalten, sowie 170 ml 10%ige NaOH gleichzeitig tropfenweise zugegeben. Nach weiteren 20 h wird das elektrisch leitfähige Bariumsulfat separiert und getrocknet. Die spezifische Leitfähigkeit des elektrisch leitfähigen Bariumsulfats beträgt nach zweistündiger Glühung bei 600°C 1,1 x 10⁻¹ (Ω x cm)⁻¹.

### Beispiel 2

100 g BaSO₄ mit einem mittleren Teilchendurchmesser von 100 µm und einer spezifischen Oberfläche von 30 m/g werden in 900 ml destilliertem Wasser suspendiert und mit der dritten Lösung aus 1 ml SnCl₄ und 1 ml konzentrierter Salzsäure versetzt, so daß sich ein pH-Wert von 1,5 einstellt. Die entstandene Ausgangsmischung wird 1 h gerührt. Nachfolgend werden gleichzeitig 800 ml 10%ige NaOH und als erste Lösung 31 ml SnCl₄, die in 100 ml 2-molarer Salzsäure gelöst sind, zugegeben, und es wird weitere 30 min gerührt. Die Temperatur der Mischung wird dabei auf 70°C gehalten. Innerhalb der nächsten 90 min wird der pH-Wert durch Zugabe von 110 ml 2-molarer Salzsäure auf 2,5 gesenkt. Danach werden als zweite Lösung 100 ml 2-molare Salzsäure, die mit 5,3 g SbCl₃ versetzt sind, sowie 170 ml 10%ige NaOH gleichzeitig tropfenweise zugegeben. Nach weiteren 20 h wird das elektrisch leitfähige Bariumsulfat separiert und getrocknet. Seine spezifische Leitfähigkeit beträgt nach zweistündiger Glühung bei 400°C 2,3 x 10⁻⁴ (Ω x cm)⁻¹ und nach zweistündiger Glühung bei 600°C 1,7 x 10⁻ (Ω x cm)⁻¹.

### Beispiel 3

100 g BaSO₄ mit einem mittleren Teilchendurchmesser von 100 µm und einer spezifischen Oberfläche von 30 m/g werden in 900 ml destilliertem Wasser suspendiert. Der pH-Wert wird durch Zugabe von 1 ml konzentrierter Salzsäure auf 2 eingestellt. Danach werden als dritte Lösung 1 ml SnCl₄ und 1 ml konzentrierte Salzsäure zugesetzt. Die so entstandene Ausgangsmischung wird 60 min gerührt, wobei sich ein pH-Wert von 1,5 einstellt. Nachfolgend werden gleichzeitig als erste Lösung 72 ml SnCl₄, die in 150 ml 2-molarer Salzsäure gelöst sind, sowie 1 l 10%ige NaOH zugegeben. Die Mischung wird anschließend 30 min gerührt, wobei die Temperatur auf 70°C gehalten wird. Innerhalb der nächsten 90 min wird der pH-Wert durch Zugabe von 110 ml 2-molarer Salzsäure auf 2,5 gesenkt. Danach werden als zweite Lösung 150 ml 2-molare Salzsäure, die mit 8 g SbCl₃ versetzt sind, und 150 ml 10%ige NaOH gleichzeitig tropfenweise zugegeben. Nach weiteren 20 Stunden wird das elektrisch leitfähige Bariumsulfat separiert und getrocknet. Seine spezifische Leitfähigkeit beträgt nach zweistündiger Glühung bei 600°C 1,9 x 10⁻ (Ω x cm)⁻¹.

### Beispiel 4

200 g BaSO₄ mit einem mittlerem Teilchenduchmesser von 0,5 µm und einer spezifischen Oberfläche von 4 m/g werden in 800 ml Wasser suspendiert. Der pH-Wert wird durch Zugabe von 1 ml konzentrierter Salzsäure auf 2 eingestellt. Anschließend werden als dritte Lösung 2 ml einer sauren SnCl₄-Lösung mit einer SnCl₄-Konzentration von 50% zugegeben, und die Lösung wird 1 h gerührt, wobei sich ein pH-Wert von 1,5 einstellt. Anschließend werden der Ausgangsmischung 1000 ml 10%ige NaOH zugegeben, wobei sich der pH-Wert auf 14 einstellt. Gleichzeitig erfolgt die Zugabe der ersten Lösung aus 62 ml SnCl₄ in 138 ml 2-molarer Salzsäure. Dabei sinkt der pH-Wert auf 11,5 ab. Danach wird die Mischung 30 min gerührt, wobei die Temperatur auf 70°C gehalten wird. Innerhalb der nächsten 90 min wird der pH-Wert mit 470 ml 2-molarer Salzsäure auf 2,5 gesenkt. Danach werden als zweite Lösung 200 ml 2-molare Salzsäure, die 10,6 g SbCl₃ enthalten, zugegeben. Um den pH-Wert auf 2,5 einzustellen, müssen insgesamt 200 ml 10%ige NaOH zugesetzt werden. Nach weiteren 20 h wird das elektrisch leitfähige Bariumsulfat separiert und getrocknet. Seine spezifische Leitfähigkeit beträgt nach zweistündiger Glühung bei 600°C 8,0 x 10⁻³ (Ω x cm)⁻¹.

### Beispiel 5

In diesem Beipiel wird im Gegensatz zu den vorangegangenen Beispielen 1 bis 4 die Beschichtung des BaSO₄ im sauren Milieu angestrebt, also bewußt auf die Anhebung des pH-Werts auf 9-15 durch gleichzeitige Zugabe einer basischen Lösung zusammen mit der ersten sauren Lösung, die SnCl₄ enthält, verzichtet.

200 g BaSO₄ mit einem mittleren Teilchendurchmesser von 0,5 µm und einer spezifischen Oberfläche von 4 m/g werden in 800 ml Wasser suspendiert. Der pH-Wert wird durch Zugabe von 1 ml konzentrierter Salzsäure auf 2 eingestellt. Anschließend werden 2 ml SnCl₄ zugegeben und die Lösung 1 h gerührt, wobei sich ein pH-Wert von 1,5 einstellt. Danach wird die Ausgangsmischung auf 70°C erhitzt und mit 10%iger NaOH der pH-Wert nur auf 2,5 angehoben. Innerhalb von 90 min werden gleichzeitig 62 ml SnCl₄, gelöst in 138 ml 2-molarer Salzsäure, und 10,6 g sbCl₃, gelöst in 200 ml 2-molarer Salzsäure, mit 1100 ml 10%iger NaOH zugegeben. Nach weiteren 20 h wird das BaSO₄ separiert und getrocknet. Die spezifische Leitfähigkeit betrug nach 2-stündiger Glühung bei 600°C 2·10⁻⁷ (Ω x cm)⁻¹. Diese relativ schlechte spezifische Leitfähigkeit und transmissionselektronenmiskroskopische Untersuchungen des Produkts belegen, daß im sauren Milieu eine Beschichtung von BaSO₄ nicht möglich ist, sondern daß ein Pulvergemisch entsteht, in welchem mit Sb₂O₃ dotiertes SnO₂ und BaSO₄ nebeneinander vorliegen.

## Patentansprüche

1. Elektrisch leitfähiges Bariumsulfat, dadurch gekennzeichnet, daß es aus BaSO₄-Teilchen mit einer spezifischen Oberfläche von 0,1 bis 150 m/g besteht, die von einer 2 bis 80 nm dicken Schicht aus mit 1 bis 15 Gew.-% Sb₂O₃ dotiertem SnO₂ umhüllt sind, und welches eine elektrische Leitfähigkeit von 1,2 x 10⁻⁴ bis 7 x 10⁻¹ (Ω X CM)⁻¹.

2. Elektrisch leitfähiges Bariumsulfat nach Anspruch 1, dadurch gekennzeichnet, daß der Anteil von Sb₂O₃ in der Schicht 6 bis 12 Gew.-% beträgt.

3. Elektrisch leitfähiges Bariumsulfat nach Anspruch 1 oder Anspruch 2, dadurch gekennzeichnet, daß die Dicke der Schicht 10 bis 30 nm beträgt.

4. Elektrisch leitfähiges Bariumsulfat nach Anspruch 3, dadurch gekennzeichnet, daß die BaSO₄-Teilchen eine spezifische Oberfläche von 0,1 bis 3 oder von 12 bis 150 m/g besitzen.

5. Verfahren zur Herstellung eines elektrisch leitfähigen Bariumsulfats, bei dem eine wäßrige BaSO₄-Dispersion mit einer ersten Lösung, die SnCl₄ enthält, versetzt wird und die Mischung anschließend mit einer zweiten Lösung, die SbCl₃ enthält, versetzt wird, dadurch gekennzeichnet, daß eine wäßrige BaSO₄-Dispersion mit einer BaSO₄-Konzentration von 50 bis 800 g/l verwendet wird, daß die erste saure Lösung SnCl₄ in einer Konzentration von 1 bis 95 Gew.-% enthält, daß die zweite saure Lösung SbCl₃ in einer Konzentration von 0,5 bis 60 Gew.-% enthält, daß mit der Zugabe der ersten Lösung zu der BaSO₄-Dispersion gleichzeitig eine basische Lösung bis zu einem pH-Wert von mehr als 9 zugegeben wird, daß der pH-Wert der Mischung durch Zugabe von Säure vor der Zugabe der zweiten Lösung auf 4 bis 1 gesenkt wird und daß das entstandene elektrisch leitfähige Bariumsulfat separiert, getrocknet und bei 300 bis 800°C geglüht wird.

6. Verfahren nach Anspruch 5, dadurch gekennzeichnet, daß der BaSO₄-Suspension vor der Zugabe der ersten Lösung eine dritte saure Lösung bei einem pH-Wert von 0 bis 3 zugegeben wird, die SnCl₄ in einer Konzentration von 1 bis 95 Gew.-% enthält und daß danach die entstandene Ausgangsmischung vor der Zugabe der ersten Lösung und der basischen Lösung 10 bis 200 min gerührt wird.

7. Verfahren nach Anspruch 5 oder Anspruch 6, dadurch gekennzeichnet, daß die Mischung nach der Zugabe der ersten Lösung und der basischen Lösung 10 bis 200 min gerührt wird und danach der pH-Wert der Mischung durch Zugabe von Säure vor der Zugabe der zweiten Lösung auf 4 bis 1 gesenkt wird.

8. Verfahren nach einem der Ansprüche 5 - 7, dadurch gekennzeichnet, daß das elektrisch leitfähige Bariumsulfat nach 1 bis 30 Stunden separiert, getrocknet und geglüht wird.

9. Verwendung des elektrisch leitfähigen Bariumsulfats nach einem der Ansprüche 1 bis 4 zur Herstellung elektrisch leitfähiger Klebstoffe oder elektrisch leitfähiger Anstrichmassen oder elektrisch leitfähiger Kunststoffe oder elektrisch leitfähiger Laminatpapiere oder elektrisch leitfähiger Synthesefasern.

## Claims

1. Electrically conductive barium sulphate, characterised in that it consists of BaSO₄ particles having a specific surface area of 0.1 to 150 m/g, which are surrounded by a layer, 2 to 80 nm thick, of SnO₂ doped with 1 to 15% by weight Sb₂O₃, and which has an electrical conductivity of 1.2 x 10⁻⁴ to 7 x 10⁻¹ (Ω x cm)⁻¹.

2. Electrically conductive barium sulphate according to Claim 1, characterised in that the content of Sb₂O₃ in the layer is 6 to 12% by weight.

3. Electrically conductive barium sulphate according to Claim 1 or Claim 2, characterised in that the thickness of the layer is 10 to 30 nm.

4. Electrically conductive barium sulphate according to Claim 3, characterised in that the BaSO₄ particles have a specific surface area of 0.1 to 3 or of 12 to 150 m/g.

5. A method for the preparation of an electrically conductive barium sulphate, in which a first solution which contains SnCl₄ is added to an aqueous BaSO₄ dispersion and a second solution which contains SbCl₃ is then added to the mixture, characterised in that an aqueous BaSO₄ dispersion having a BaSO₄ concentration of 50 to 800 g/l is used, that the first acidic solution contains SnCl₄ in a concentration of 1 to 95% by weight, that the second acidic solution contains SbCl₃ in a concentration of 0.5 to 60% by weight, that with the addition of the first solution to the BaSO₄ dispersion a basic solution is simultaneously added up to a pH value of more than 9, that the pH value of the mixture is lowered to 4 to 1 by the addition of acid before the addition of the second solution and that the resulting electrically conductive barium sulphate is separated, dried and annealed at 300 to 800°C.

6. A method according to Claim 5, characterised in that before the addition of the first solution a third acidic solution which contains SnCl₄ in a concentration of 1 to 95% by weight is added at a pH value of 0 to 3 to the BaSO₄ suspension and that thereafter the resulting starting mixture is stirred for 10 to 200 minutes before the addition of the first solution and the basic solution.

7. A method according to Claim 5 or Claim 6, characterised in that the mixture after the addition of the first solution and of the basic solution is stirred for 10 to 200 minutes and thereafter the pH value of the mixture is lowered to 4 to 1 by the addition of acid before the addition of the second solution.

8. A method according to one of Claims 5 - 7, characterised in that the electrically conductive barium sulphate is separated, dried and annealed after 1 to 30 hours.

9. The use of the electrically conductive barium sulphate according to one of Claims 1 to 4 for the production of electrically conductive adhesives or electrically conductive coating compounds or electrically conductive plastics materials or electrically conductive laminate papers or electrically conductive synthetic fibres.

## Revendications

1. Sulfate de baryum électroconducteur caractérisé en ce qu'il est constitué par des particules de BaSO₄ possédant une surface spécifique de 0,1 à 150 m/g, qui sont enrobées d'une couche ayant une épaisseur de 2 à 80 nm, constituée par du SnO₂ dopé à concurrence de 1 à 15% en poids avec du Sb₂O₃, et qui possède une conductivité électrique de 1,2 x 10⁻⁴ à 7 x 10⁻¹ (Ω x cm)⁻¹.

2. Sulfate de baryum électroconducteur selon la revendication 1, caractérisé en ce que la fraction Sb₂O₃ dans la couche s'élève de 6 à 12% en poids.

3. Sulfate de baryum électroconducteur selon la revendication 1 ou 2, caractérisé en ce que l'épaisseur de la couche s'élève de 10 à 30 nm.

4. Sulfate de baryum électroconducteur selon la revendication 3, caractérisé en ce que les particules de BaSO₄ possèdent une surface spécifique de 0,1 à 3 ou de 12 à 150 m/g.

5. Procédé pour la préparation d'un sulfate de baryum électroconducteur dans lequel, à une dispersion aqueuse de BaSO₄, on ajoute une première solution qui contient du SnCl₄ et on ajoute ensuite au mélange, une deuxième solution qui contient du SbCl₃, caractérisé en ce qu'on utilise une dispersion aqueuse de BaSO₄ possédant une concentration en BaSO₄ de 50 à 800 g/l, en ce que la première solution acide contient du SnCl₄ en une concentration de 1 à 95 % en poids, en ce que la deuxième solution acide contient du SbCl₃ en une concentration de 0,5 à 60% en poids, en ce que, avec l'addition de la première solution à la dispersion de BaSO₄, on ajoute simultanément une solution basique jusqu'à ce que l'on obtienne une valeur de pH supérieure à 9, en ce qu'on abaisse la valeur de pH du mélange de 4 à 1 par addition d'acide avant l'addition de la deuxième solution et en ce qu'on sépare le sulfate de baryum électroconducteur obtenu, on le sèche et on le calcine à une température de 300 à 800°C.

6. Procédé selon la revendication 5, caractérisé en ce qu'on ajoute à la suspension de BaSO₄, avant l'addition de la première solution, une troisième solution acide à une valeur de pH de 0 à 3, qui contient du SnCl₄ en une concentration de 1 à 95% en poids et en ce qu'on agite ensuite le mélange de départ obtenu pendant 10 à 200 minutes avant l'addition de la première solution et de la solution basique.

7. Procédé selon la revendication 5 ou 6, caractérisé en ce qu'on agite le mélange pendant 10 à 200 minutes après l'addition de la première solution et de la solution basique, et on abaisse ensuite la valeur de pH du mélange de 4 à 1 par addition d'acide avant l'addition de la deuxième solution.

8. Procédé selon l'une quelconque des revendications 5 à 7, caractérisé en ce qu'on sépare, après un laps de temps de 1 à 30 heures, le sulfate de baryum électroconducteur, on le sèche et on le calcine.

9. Utilisation du sulfate de baryum électroconducteur selon l'une quelconque des revendications 1 à 4, pour la fabrication d'adhésifs électroconducteurs ou de matières d'enduction électroconductrices, ou encore de matières synthétiques électroconductrices ou de papiers laminés électroconducteurs ou encore de fibres synthétiques électroconductrices.
